(19) Europäisches Patentamt European Patent Office Office européen des brevets

(11) **EP 3 127 370 B1**

(12) **EUROPEAN PATENT SPECIFICATION**

(45) Date of publication and mention of the grant of the patent:
**26.08.2020 Bulletin 2020/35**

(51) Int Cl.:
***H04W 36/14*** *(2009.01)*  ***H04W 36/30*** *(2009.01)*
***H04W 88/06*** *(2009.01)*

(21) Application number: **14888499.2**

(22) Date of filing: **31.03.2014**

(86) International application number:
**PCT/US2014/032366**

(87) International publication number:
**WO 2015/152872 (08.10.2015 Gazette 2015/40)**

(54) **METHODS AND APPARATUS FOR VERTICAL HANDOVER**

VERFAHREN UND VORRICHTUNG FÜR VERTIKALE ÜBERGABE

PROCÉDÉS ET APPAREIL DE TRANSFERT VERTICAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.02.2017 Bulletin 2017/06**

(73) Proprietor: **Intel Corporation**
**Santa Clara, CA 95054 (US)**

(72) Inventors:
• **MENG, Peng**
  **Minhang (CN)**

• **ZHU, Jing**
  **Portland, OR 97229 (US)**

(74) Representative: **HGF**
**1 City Walk**
**Leeds LS11 9DX (GB)**

(56) References cited:
| | |
|---|---|
| WO-A1-2011/002607 | CA-A1- 2 769 368 |
| KR-A- 20130 119 123 | US-A1- 2005 059 400 |
| US-A1- 2006 148 479 | US-A1- 2007 133 472 |
| US-A1- 2007 133 472 | US-A1- 2007 218 906 |
| US-A1- 2011 281 557 | |

**Description**

**BACKGROUND**

Field

The disclosure relates to a method and apparatus for method and apparatus for vertical handover. Specifically, the disclosure relates to a method and apparatus for timely execution of vertical handover without causing continual switching between available signal domains.

Description of Related Art

With the increase in demand for consumer access to communication services anywhere and at any time, the technology has evolved to integrate various wireless connection access. One such access is the Fourth Generation (4G) wireless access system which provides significantly higher data rate, offers a variety of services and allows global roaming. In the conventional 4G network, a mobile device having multiple interface options can chose the most suitable access link among the available alternatives. The available access link includes Institute of Electrical and Electronics Engineers (IEEE) standard 802.1 1 Wireless Local Area Network (WLAN), IEEE 802.16 Worldwide Interoperability for Microwave Access (WiMAX), satellite systems and Bluetooth (BT), as well as the conventional cellular telephone networks.

The conventional 4G mobile terminals are designed to seamlessly transfer to the best available link among all various candidates. The transfer should occur transparently and without interruption to the ongoing connection, whether it is voice or data. The seamless handover between heterogeneous networks is known as seamless vertical handover (VHO). The IEEE 802.11 only provides the overall framework for the vertical handover. The actual algorithms are defined by designers and engineers.

US 2005/0059400 A1 describes a method of handing off a call between networks including monitoring a quality of a first link between a mobile station and a wireless local area network (WLAN) when the mobile station is actively connected with the WLAN on a call and monitoring a quality of a second link between the mobile station and a cellular network when the mobile station is actively connected with the WLAN on a call. The method also includes handing off the call from the WLAN to the cellular network when the quality of the first link is less than a handoff trigger threshold for a drop count duration and when the quality of the second link is greater than a minimum cellular link quality threshold. US 2007/0133472 A1 also relates to a vertical handoff method.

The invention is defined by the independent claims.

**BRIEF DESCRIPTION OF THE DRAWINGS**

These and other embodiments of the disclosure will be discussed with reference to the following exemplary and non-limiting illustrations, in which like elements are numbered similarly, and where:

Fig. 1 schematically shows a conventional system having different signal providers;
Fig. 2 schematically illustrates an ISW networks according to another embodiment of the disclosure;
Fig. 3 shows an exemplary network for implementing an embodiment of the disclosure.
Fig. 4 is a flow diagram of an exemplary algorithm for implementing an embodiment of the disclosure;
Fig. 5 schematically shows an exemplary apparatus according to one embodiment of the disclosure; and
Fig. 6 schematically shows a system for implementing an embodiment of the disclosure.

**DETAILED DESCRIPTION**

Certain embodiments may be used in conjunction with various devices and systems, for example, a mobile phone, a smartphone, a laptop computer, a sensor device, a BlueTooth (BT) device, an Ultrabook™, a notebook computer, a tablet computer, a handheld device, a Personal Digital Assistant (PDA) device, a handheld PDA device, an on board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (AV) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with devices and/or networks operating in accordance with existing Institute of Electrical and Electronics Engineers (IEEE) standards (IEEE 802.11-2012, IEEE Standard for Information technology-Telecommunications and information exchange between systems Local and metropolitan area networks - Specific requirements Part 11: Wireless LAN Medium Access Control (MAC) and Physical Layer (PHY) Specifications, March 29, 2012; IEEE 802.11 task group ac (TGac) ("IEEE 802.11-09/0308r12 - TGac Channel Model Addendum Document"); IEEE 802.11 task group ad (TGad) (IEEE P802.11ad-2012, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 3: Enhancements for Very High Throughput in the 60GHz Band, 28 December, 2012)) and/or future versions and/or derivatives thereof, devices and/or networks operating in accordance with existing Wireless Fidelity (WiFi) Alliance (WFA) Peer-to-Peer (P2P) specifications (WiFi P2P technical specification, version 1.2, 2012) and/or future versions and/or derivatives thereof, devices and/or networks operating in accordance with existing cellular specifications and/or protocols, e.g., 3rd Generation Partnership Project (3GPP), 3GPP Long Term Evolution (LTE), and/or future versions and/or derivatives thereof, devices and/or networks operating in accordance with existing WirelessHDTM specifications and/or future versions and/or derivatives thereof, units and/or devices which are part of the above networks, and the like.

Some embodiments may be used in conjunction with one way and/or two-way radio communication systems, a BT device, a BLE device, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like. Some demonstrative embodiments may be used in conjunction with a WLAN. Other embodiments may be used in conjunction with any other suitable wireless communication network, for example, a wireless area network, a "piconet", a WPAN, a WVAN and the like.

As stated, the VHO between WLAN and 3GPP/LTE have attracted a great deal of attention. Most of current solutions are centered on a situation where a mobile device is simultaneously served by both a Wi-Fi signal and a cellular signal. The cellular signal provider (e.g., base station) and the Wi-Fi signal provider may be co-located or may be located proximal to each other so as to provide overlapping signals.

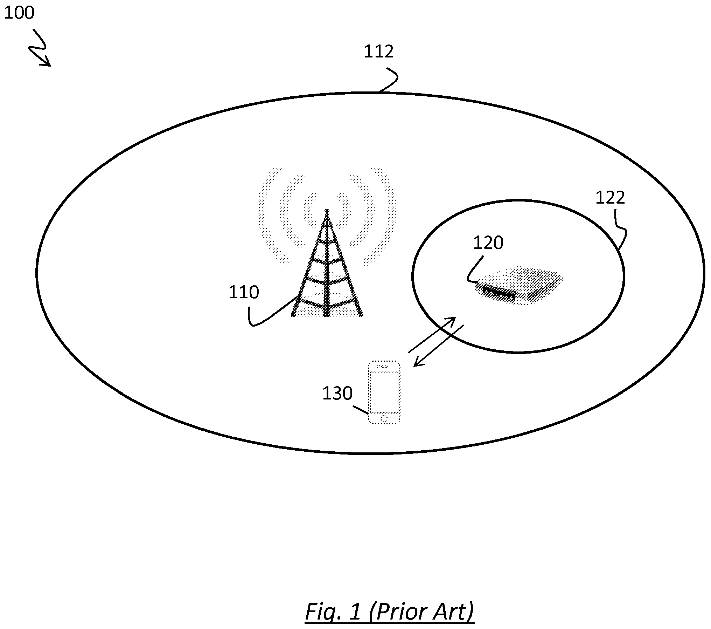

Fig. 1 schematically shows a conventional system having different signal providers. Specifically, Fig. 1 illustrates system 100 having radio access network (RAN) 110 for providing 3G/LTE or 4G/LTE signals and AP 120 for providing and a Wi-Fi signal. AP 120 can define a conventional Wi-Fi hotspot and is not limited to a modem, a router or a switch. Similarly, RAN 110 may define any conventional radio network including one or more base stations or towers. For simplicity only one base station and AP are shown. The cellular station 110 and Wi-Fi station 120 provide an integrated small-cell and Wi-Fi (ISW) network. The ISW may be part of a larger network (not shown). The system of Fig. 1 may be used with the disclosed embodiments.

In the exemplary embodiment of Fig. 1, the Wi-Fi and the cellular stations are differently situated but provide overlapping signal service. The signal reach of cellular station 110 is illustrated by boundary 112 and the signal reach of Wi-Fi station 120 is shown by boundary 122. Mobile device 130 can be configured to communicate through both the Wi-Fi signal as well as the cellular signal. Mobile device 130 can support public data network (PDN) or a virtual mobile connection (EPS Bearer) without increasing the user equipment complexity or impacting the energy performance score (EPS).

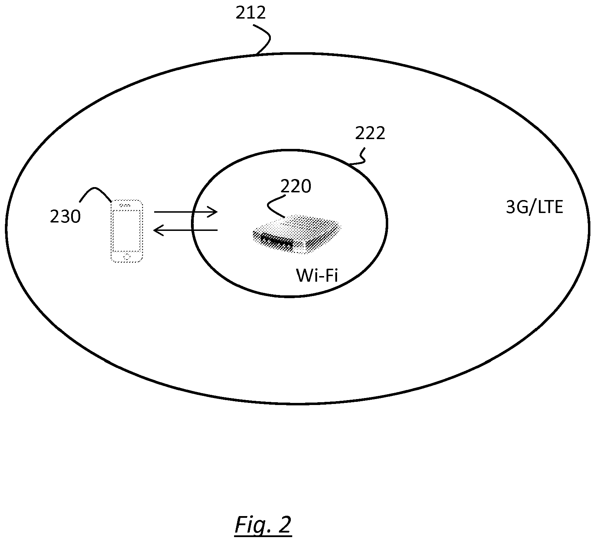

Fig. 2 schematically illustrates an ISW networks according to another embodiment of the disclosure. Here, the RAN and the AP are co-located at device 220 and one or more antennas are used to propagate the cellular and the Wi-Fi signals. Device 220 forms an ISW. In Fig. 2, mobile device 230 traverses between cellular realm 212 and Wi-Fi realm 222. Mobile device 230 uses the cellular signal when in between boundaries 212 and 222. Mobile device 230 switches to Wi-Fi signal when entering boundary 222.

A condition known as the ping-pong effect occurs when mobile device 230 straddles boundary 222, and given the available signals, the mobile device continually switches between Wi-Fi and cellular modes. The ping-pong effect prevents VHO from one mode to the other. Conventional VHO algorithms have failed to address the ping-pong effect.

Received signal strength indicator $RSS$ is a known parameter used for VHO in heterogeneous wireless networks. Conventional VHO algorithms use $RSS$ to trigger VHO. However, due to $RSS$ ping-pong effect between the cellular and Wi-Fi networks, using $RSS$ alone causes false and frequently handovers. Other conventional methods that do not directly use $RSS$ have been shown to cause accelerated or delayed VHO.

The ISW may be an integral part of the heterogeneous wireless networks. A key feature of such networks is having the Wi-Fi AP and the 3GPP RAN co-located on the same device. In one embodiment of the disclosure, the cellular $RSS$ and the Wi-Fi $RSS$ values are used to enable real-time and accurate VHO algorithm free from the ping-pong effect. In another embodiment, instantaneous $RSS$ measurements along with the mobile device's travel pattern and threshold values are used to determine the optimal communication mode. The exemplary algorithms disclosed herein overcome the ping-pong effect of the conventional *RSS*-reliant methods while preventing early or delayed VHO issues.

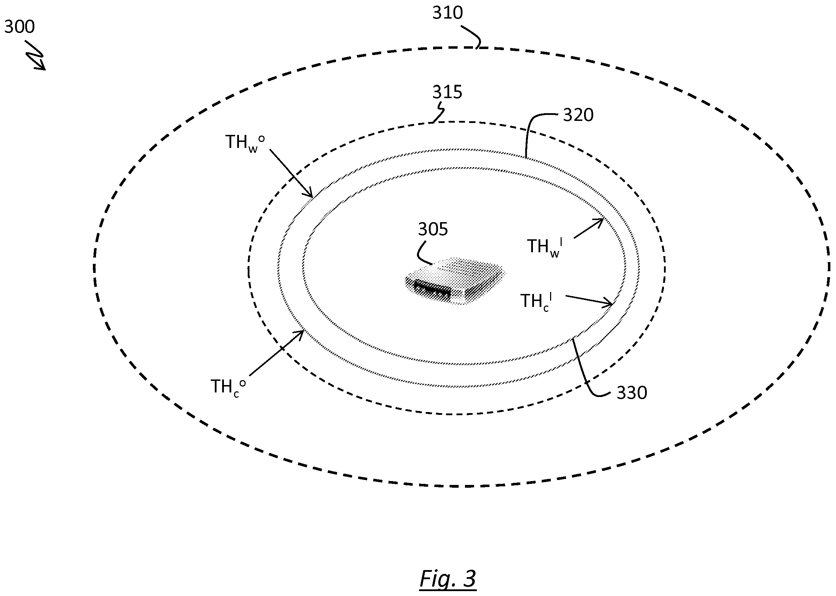

Fig. 3 shows an exemplary network for implementing an embodiment of the disclosure. Specifically, Fig. 3 illustrates the Wi-Fi and Cellular RSS threshold value. Network 300 of Fig. 3 comprises ISW 305 which can simultaneously transmit two or more signal modes. For example, ISW 305 may transmit in cellular mode (*e.g.*, 3G/LTE) and in Wi-Fi mode. Boundary 310 denotes the reach of the cellular signal transmitted by ISW 305. Boundary 315 denotes the reach of the Wi-Fi signal transmitted by ISW 305. Thus, the outmost two dotted-line circles illustrate the maximum coverage of cellular signal and Wi-Fi signals, respectively. In Fig. 3, the coverage of cellular signal is larger than Wi-Fi signal. Boundary 320 may be the approximate location where the instantaneous RSS values shift so as to favor one mode over the other. That is, Boundary 320 may be the switching point when moving from Wi-Fi to cellular signal if moving away from ISW 305. $TH_W^O$ and $TH_C^O$ are the Wi-Fi and cellular *RSS* at the switching point, respectively.

Circle 330 can be the switching point when moving form cellular to Wi-Fi signal. In one embodiment, when moving from 305 (*i.e.*, station) to 315 or 310, the switching point is at 320. This means that the mobile device will be on Wi-Fi signal in 320, and on cellular signal outside of 320. If moving from boundary 315 or 310 to 305 (*i.e.*, station), the switching point is at boundary 330. This means that the mobile device will be on cellular signal outside of boundary 330, and on Wi-Fi signal inside of boundary 330.

The switch point or the *RSS* threshold values can be counted by a statistical method. The threshold values (*i.e.*, $TH_C^I$, $TH_C^O$, $TH_W^I$, $TH_W^O$) can be empirically or theoretically determined. It should be noted that while the exemplary algorithm of Fig. 3 is discussed with respect to ISW having cellular and Wi-Fi modes, the disclosed principles are not limited thereto and can be applied to any two or more modes of communication using overlapping signals.

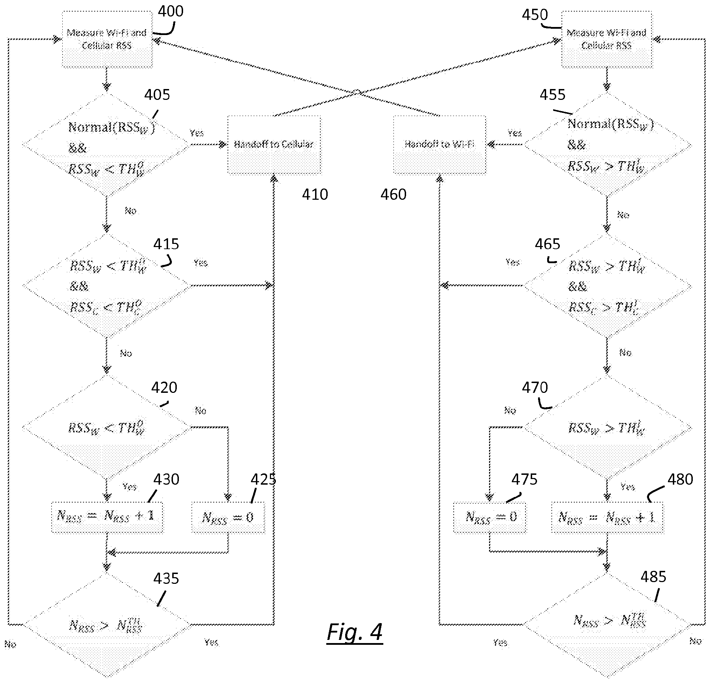

Fig. 4 is a flow diagram of an exemplary algorithm according to one embodiment of the disclosure. The exemplary algorithm of Fig. 4 can be implemented in connection with network 300 of Fig. 3. The algorithm can be implemented as software, firmware or may be encoded into hardware. The algorithm can be implemented at the mobile device. The algorithm of Fig. 4 uses known features of the ISW to avoid the ping-pong effect plaguing the conventional VHO algorithms.

The algorithm starts at steps 400/450 where mobile device measures the *RSS* from both the Wi-Fi and the cellular transmitters. In one embodiment, the mobile device measures the instantaneous *RSS* for each of the two networks. Conventional means for measuring the *RSS* can be used.

At step 405/455 the respective *RSS* values are compared against the threshold *RSS* values to determine whether VHO is appropriate. At step 405 determination is made as a function of the normal *RSS* condition, which is defined as $Normal(RSS_W^N)$:

$$Normal(RSS_W^N) = \begin{cases} true, & RSS_W^N \ in \ [2 * RSS_W^{N-1} - RSS_W^{N-2} - \sigma, 2 * RSS_W^{N-1} - RSS_W^{N-2} + \sigma] \\ false, & otherwise \end{cases}$$

where *N* is the Nth received beacon signal and σ represents a configurable value (*e.g.*, σ *can be set to* 1, 2 or 3). The $Normal(RSS_W^N)$ is a function which determines if the Wi-Fi signal is degrading. In the above relationship, $\text{Normal}(RSS_W^N) = \text{true},$ means the *RSS* is not increasing or decreasing sharply; in other words, the value is substantially gradually decreasing (or the slope of the line is substantially maintained). It is the sharp or rapid increase or decrease of the *RSS* that can lead to the ping-pong effect.

By way of example, it is assumed that σ is set to 3. An example of $Normal(RSS_W^N) =$ true is the following: $RSS_W^{N-2} = -70, RSS_W^{N-1} = -68, RSS_W^N = -63.$ Although $RSS_W^N - RSS_W^{N-1} = 5,$ the $RSS_W$ should not be considered to increase sharply, because the $RSS_W$ is gradually increasing, it is possible the mobile device is moving from boundary 315 to 305. An example of $Normal(RSS_W^N) = \text{false}$ is: $RSS_W^{N-2} = -70, \ RSS_W^{N-1} = -70, RSS_W^N = -66.$ Although $RSS_W^N - RSS_W^{N-1} = 4,$ the $RSS_W$ is considered to increase sharply which is likely caused by the ping-pong effect. It should be noted that if $RSS_W$ is stable, for example, its value is maintained at 78, then the condition holds as: Normal(RSS$_W$) = true.

The conditions of step 405 determine: (1) whether the Wi-Fi signal is rapidly degrading through the function *Normal* ($RSS_W$), and (2) if $RSS_W$ is less than the $TH_W^O$ value. If both conditions of step 405 are satisfied, VHO is made from Wi-Fi to the cellular mode as shown at step 410.

The conditions of step 405 are configured to determine whether an immediate change to cellular mode is warranted. That is, a determination is made as to whether the signal $RSS_W$ is rapidly declining. If an immediate change to cellular mode is not required, at step 415, a second inquiry is made. The conditions of step 415 determine: (1) whether the instantaneous value of the Wi-Fi signal ($RSS_w$) is less than the Wi-Fi signal strength threshold $(TH_W^O)$ when moving out of the Wi-Fi area, and (2) whether the instantaneous value of cellular signal strength ($RSS_c$) is less than the cellular sign strength threshold $(TH_C^O)$ when moving out of the Wi-Fi area. In one embodiment of the disclosure, the signal strength values for both the cellular and the Wi-Fi modes may be measured at each step. For example, the $RSS_w$ is independently measured for each of steps 405, 415 and 420. The sequential measurements allow the algorithm to determine if the Wi-Fi (or cellular) signal strength is decaying, and if so, how rapidly.

If both conditions of step 415 are satisfied, then handoff is made from Wi-Fi to the cellular mode. If one or both of the conditions are not met, then the Wi-Fi mode is maintained and a third inquiry is made at step 420. Here, the $RSS_W$ may be measured again and tested against the threshold value for the wireless signal $(TH_W^O)$ when the mobile is moving out of the Wi-Fi area.

In the exemplary flow diagram of Fig. 4, $N_{RSS}$ means the number of received continuous Wi-Fi beacons whose $RSS$ is less than $TH_W^O$ or bigger than $TH_W^I$. In one embodiment, $N_{RSS}^{TH}$ is the threshold of $N_{RSS}$ to trigger handover.

In the exemplary flow diagram of Fig. 4, the steps 420, 425 and 430 enable counting the number of received continuous Wi-Fi beacons ($N_{RSS}$) whose $RSS$ is less than $TH_W^O$. Similarly, steps 470, 475 and 480 enable counting the number of received continuous Wi-Fi beacons ($N_{RSS}$) whose $RSS$ is greater than $TH_W^I$. On both of these two conditions, if $N_{RSS}$ is greater than $N_{RSS}^{TH}$, the mobile will handover to Cellular or Wi-Fi signal respectively as shown in steps 435 and 485.

If the mobile node is operating on cellular signal or if VHO is made from Wi-Fi to cellular, then step 450 is implemented by measuring Wi-Fi and the cellular $RSS$ values. Once in the cellular mode, step 455 determines whether to continue operating the mobile device on the cellular mode or to hand-off to Wi-Fi. Step 455 determination is made based on two conditions: (1) *Normal* ($RSS_W$); and (2) $RSS_W > TH_W^I$. $RSS_w$ That is, the instantaneous value of the wireless $RSS$ has to be greater than the Wi-Fi threshold value when the mobile device is moving into the Wi-Fi area. If both conditions hold, then VHO is made to Wi-Fi as shown at step 460. If at least one condition is not met, then the cellular mode continues. At step 465, an additional inquiry is made to determine whether to switch to Wi-Fi mode. Namely, step 465 requires that (1) $RSS_w > TH_W^I$ and, (2) $RSS_C > TH_C^I$. The second condition requires that the instantaneous value of cellular $RSS_C$ to be greater than the cellular $RSS$ threshold value when moving out of the cellular area. If both conditions hold then VHO is made to Wi-Fi signal. If both conditions are not met, then at step 470, inquiry is made as to whether the instantaneous value of the Wi-Fi RSS exceeds the Wi-Fi RSS threshold when moving into the Wi-Fi area ($RSS_W > TH_W^I$).

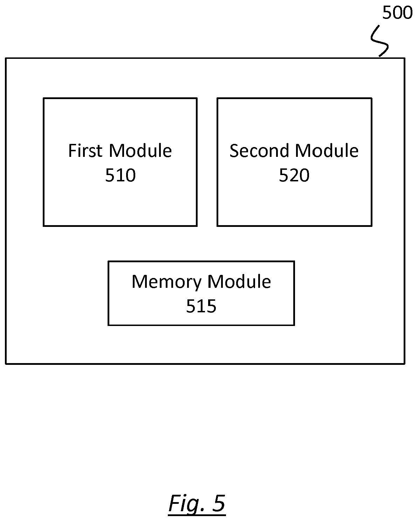

Fig. 5 schematically shows an exemplary device or apparatus according to one embodiment of the disclosure. Specifically, Fig. 5 shows device 500 which can be an integral part of a larger system or can be a stand-alone unit in a smart device. For example, device 500 may comprise hardware, software, firmware, system on chip or any combination thereof. Device 500 may also be part of a larger system having multiple antennas, a radio and a memory system. Device 500 includes first module 510 and second module 520 and memory 515. Each of module 510 and 520 as well as memory 515 can define one or more independent processor or memory circuits. In an exemplary embodiment, at least one of modules 510 or 520 includes a processor circuit and an independent memory circuit (not shown) communicating with each other and with memory module 515. In another embodiment, modules 510 and 520 define different parts of the same data processing circuit. While shown with three modules, device 500 may have multiple modules or a single integrated module without departing from the disclosed principles.

In one embodiment of the disclosure, first module 510 receives one or more Wi-Fi signals and one or more cellular signals. The Wi-Fi and cellular signals can be transmitted from an ISW as discussed above. The first module can be configured to determine a signal strength indicator $RSS_W$ value for one or more of the received Wi-Fi signals. Similarly, the first module can be configured to determine a signal strength indicator RSSC value for one or more received cellular signals.

Conventional circuitry and algorithm for measuring RSS may be implemented with the first module. For example, a conventional successive-detection architecture may be used for measuring the RSS. Such circuits include a plurality of limiting amplifiers connected in series, a plurality of rectifiers receiving the amplifier outputs and an adder for summing the rectifier outputs. Another conventional signal strength measurement circuit for use with the first module may include a converter to convert a high-frequency radio signal from an antenna into an intermediate frequency (IF) signal through serially-connected differential amplifiers, a signal strength amplifier section for converting into current a voltage amplitude of an absolute value signal outputted from the differential amplifiers of the IF section, and a current to voltage conversion circuit for converting the output current from the RSSI amplifier section.

Memory module 515 may communicate with first module 510 and/or second module 520. Memory module 515 may be co-located with the first and second modules. Alternatively, memory 515 may define an external memory (e.g., a remote storage server) in communication with the first and/or second modules. In one embodiment of the disclosure, memory module 515 can be configured to store Wi-Fi and cellular signal strength thresholds value for entering or exiting Wi-Fi area. It should be noted that while the schematic representations show $TH_W^I$, $TH_C^I$, $TH_C^O$ $TH_W^O$ as relating to an area or a boundary, the threshold signs are directed to signal thresholds and not the area sign.

Second module 520 may be integrated with the first module or may define a separate module. Second module 520 can communicate with first module 510 and memory module 515. Second module 520 may include a controller or a processor circuit. Second module 520 can be configured to select one of the Wi-Fi or cellular signals for communication based on available instructions. In an exemplary embodiment, second module 520 may select the Wi-Fi signal if the $RSS_W$ value increases slowly or moderately (not sharply) and the $RSS_W$ value is larger than the $TH_W^I$ value.

Device 500 may continually repeat signal detection and the disclosed algorithm to switch from one signal domain to another without causing the ping-pong effect. In another embodiment, second module 520 can be configured to select the cellular signal if the $RSS_W$ value is not decreasing sharply and if the $RSS_W$ value is less than the $TH_W^O$ value.

In still another embodiment, second module 520 can be configured to select the Wi-Fi signal if the received signal strength $RSS_W$ is greater than the $TH_W^I$ value and if the $RSS_C$ value is greater than the $TH_C^I$ value. In yet another embodiment, second module 520 can be configured to select the cellular signal if the $RSS_C$ value is less than the $TH_C^O$ value and if the $RSS_W$ value is less than the $TH_W^O$ value.

In still another embodiment, second module 520 can be further configured to select the cellular signal if the number of continuous $RSS_W$ value which is less than the $TH_W^O$ ($N_{RSS}$) is greater than $N^{th}_{RSS}$.

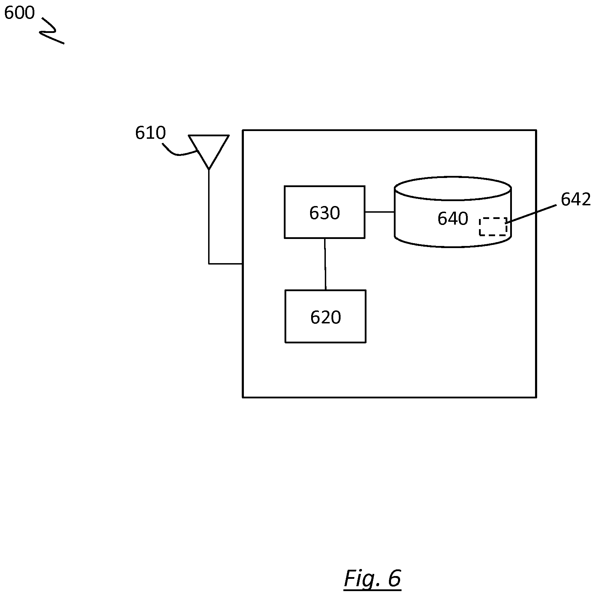

Fig. 6 schematically shows a system for implementing an embodiment of the disclosure. For example, the steps of any of the above-disclosed flow diagrams may be implemented in the system of Fig. 6. System 600 of Fig. 6 may define a mobile device such as a smartphone, a laptop, an Ultrabook or any other device capable of communicating with more than one signal mode. While system 600 is shown with antenna 610, the disclosure is not limited to having one antenna. Multiple antennas can be added to system 600 such that different signals for different protocols can be received at different antennas. For example, system 600 may include a first antenna for receiving (and transmitting) a cellular signal and a second antenna for receiving (and transmitting) a Wi-Fi signal.

The signal(s) received at antenna 610 are relayed to radio receiver 620. Radio receiver 620 may include transceiver components such as RF front-end receiver components or a receiver/transmitter. The RF front end may include the circuitry between the antenna and the intermediate IF stage. In one embodiment, the IF conversion stage may be implemented at the first module. Conventional RF front ends include the components in the receiver that process the signal at the original incoming radio frequency, before converting it to an intermediate frequency. Although not shown, system 600 may be connected to a an ISW, a base station, WLAN, the internet backbone or any other signal transmitter.

Radio receiver 620 may convert analog signals to a digital data stream and direct the data stream to processor 630. Processor 630 may include one or more modules as discussed in relation to Fig. 5. Processor 630 may also communicate with memory module 640. While shown as a separate circuitry in the exemplary system of Fig. 6, it should be noted that instructions 642 can be embedded on processor 630 as firmware to obviate the addition of memory circuit 640.

Memory circuit 640 may contain instructions 642 for processor 630 to implement one or more of the steps of the exemplary methods disclosed herein. For example, memory module 640 may comprise a computer-readable storage device containing a set of instructions to cause the system of Fig. 6 to perform a process including: measure a signal strength indicator $RSS_W$ value for one or more received Wi-Fi signals and measure a signal strength indicator $RSS_C$ value for one or more received cellular signals (at radio receiver 620); identify signal strength threshold values for entering $TH_W^I$ and exiting $TH_W^O$ a Wi-Fi signal domain and identify signal strength threshold values for entering $TH_C^I$ and exiting $TH_C^O$ a cellular signal domain (from the memory module 640); and select the Wi-Fi signal if the $RSS_W$ value is increasing not too sharply and if the $RSS_W$ value is greater than the $TH_W^I$ value (at processor 630).

The invention is defined only by the claims. Further examples of the present disclosure are provided below; however these examples are presented not as embodiments of the invention but as examples useful for understanding the invention.

According to an example, a method is described for selecting between a Wi-Fi signal and a cellular signal for communicating at a mobile node, comprising: receiving one or more of Wi-Fi signals and measuring a signal strength indicator $RSS_W$ value for each of the received Wi-Fi signals; receiving one or more of cellular signals and measuring a signal strength indicator $RSS_C$ value for each of the received cellular signals; identifying signal strength threshold values for entering $TH_W{}^1$ and exiting $TH_W{}^O$ a Wi-Fi signal domain; identifying signal strength threshold values for entering $TH_C{}^I$ and exiting $TH_C{}^O$ a cellular signal domain; and selecting the Wi-Fi signal if the $RSS_W$ value is substantially maintained or gradually decrease and if the $RSSw$ value is greater than the $TH_W{}^I$ value.

According to another example, a method is disclosed for selecting between a Wi-Fi signal or a cellular signal for communicating at a mobile node, comprising: receiving one or more of Wi-Fi signals and measuring a signal strength indicator $RSS_W$ value for each of the received Wi-Fi signals; receiving one or more of cellular signals and measuring a signal strength indicator $RSS_C$ value for each of the received cellular signals; identifying signal strength threshold values for entering $TH_W{}^I$ and exiting $TH_W{}^O$ a Wi-Fi signal domain; identifying signal strength threshold values for entering $TH_C{}^I$ and exiting $TH_C{}^O$ a cellular signal domain; and selecting the cellular signal if the $RSS_W$ value is substantially maintained or gradually increases and if the $RSS_W$ value of the received signals is less than the $TH_W{}^O$ value.

According to another example, an apparatus is disclosed. The apparatus is to select one of a Wi-Fi signal or a cellular signal, the apparatus comprising: a first module configured to measure a signal strength indicator $RSS_W$ value for one or more received Wi-Fi signals and a signal strength indicator $RSS_C$ value for one or more received cellular signals; a memory module configured to store signal strength threshold values for entering $TH_W{}^I$ and exiting $TH_W{}^O$ a Wi-Fi signal domain and for entering $TH_C{}^I$ and exiting $TC_C{}^O$ a cellular signal domain; and a second module in communication with the first module and the memory module, the second module configured to select the Wi-Fi signal if the $RSS_W$ value is substantially maintained or gradually decrease and if the $RSS_W$ value is greater than the $TH_W{}^I$ value.

According to another example, a system is disclosed, the system comprising: one or more antennas to receive one more Wi-Fi signal and one or more cellular signals; a radio receiver to receive the one or more Wi-Fi and cellular signals, the radio receiver configured to measure a signal strength indicator $RSS_W$ value for one or more received Wi-Fi signals and a signal strength indicator $RSS_C$ value for one or more received cellular signals; a memory module configured to store signal strength threshold values for entering $TH_W{}^I$ and exiting $TH_W{}^O$ a Wi-Fi signal domain and for entering $TH_C{}^I$ and exiting $TH_C{}^O$ a cellular signal domain; and a processor in communication with the radio receiver and the memory module, the processor configured to select the Wi-Fi signal if the $RSS_W$ value is substantially maintained or gradually decrease and if the $RSS_W$ value is greater than the $TH_W{}^I$ value.

According to another example, a computer-readable storage device is disclosed, the computer-readable storage device containing a set of instructions to cause a computer to perform a process comprising: measure a signal strength indicator $RSSw$ value for one or more received Wi-Fi signals; measure a signal strength indicator $RSS_C$ value for one or more received cellular signals; identify signal strength threshold values for entering $TH_W{}^I$ and exiting $TH_W{}^O$ a Wi-Fi signal domain; identify signal strength threshold value for entering $TH_C{}^I$ and exiting $TH_C{}^O$ a cellular signal domain; and select the Wi-Fi signal if the $RSS_W$ value is substantially maintained or gradually decrease and if the $RSSw$ value is greater than the $TH_W{}^I$ value.

While the principles of the disclosure have been illustrated in relation to the exemplary embodiments shown herein, the principles of the disclosure are not limited thereto and include any modification, variation or permutation thereof. The scope of protection is defined in the claims.

**Claims**

1. A method for selecting between a Wi-Fi signal provided by a Wi-Fi signal provider, ISW, (305) and a cellular signal during an ongoing connection for handover, the method carried out at a mobile node, the method comprising:

   while the mobile node is operating on a cellular signal, receiving (450) one or more of Wi-Fi signals and measuring a signal strength indicator $RSS_W$ value for each of the received Wi-Fi signals;
   while the mobile node is operating on the cellular signal, receiving (450) one or more of cellular signals and measuring a signal strength indicator $RSS_C$ value for each of the received cellular signals;
   identifying signal strength value thresholds for entering $TH_W^I$ and exiting $TH_W^O$ a Wi-Fi signal domain;
   identifying signal strength threshold values for entering $TH_C^I$ and exiting $TH_C^O$ a cellular signal domain; and
   selecting (460) the Wi-Fi signal if (455) the $RSSw$ value is substantially maintained or gradually decreases and if the $RSS_W$ value is greater than the $TH_W{}^I$ value,

   wherein the $RSSw$ value is determined to be substantially maintained or gradually decreasing if the $RSS_W$ value is within a bounded range of values, the bounded range of values defined by a first previous signal strength indicator $RSS_W^{N-1}$, a second previous signal strength indicator $RSS_W^{N-2}$, and a configurable value $\sigma$, wherein $N$ is an $N^{th}$ received beacon signal, and wherein $RSS_W^{N-1}$ and $RSS_W^{N-2}$ correspond to the $(N - 1)^{th}$ and $(N - 2)^{th}$ beacons respectively, and wherein the bounded range of values is given by

$$[2 * RSS_W^{N-1} - RSS_W^{N-2} - \sigma, 2 * RSS_W^{N-1} - RSS_W^{N-2} + \sigma];$$

wherein $TH_W^O$ and $TH_C^O$ are respectively the Wi-Fi and cellular RSS values at a first switching point (320) corresponding to a location at which the RSS value of the cellular signal is stronger than the RSS value of the Wi-Fi signal when the mobile node is moving away from the ISW; and

wherein $TH_W^I$ and $TH_C^I$ are respectively the Wi-Fi and cellular RSS value at a second switching point (330) corresponding to a location at which the RSS values of the Wi-Fi signal is stronger than the RSS value of the cellular signal when the mobile node is moving towards the ISW.

2. The method of claim 1, further comprising, while the mobile node is operating on a Wi-Fi signal, selecting (410) the cellular signal if (405) the $RSS_W$ value is gradually decreasing and if the $RSS_W$ value of the received signal is less than the $TH_W^O$ value.

3. The method of claim 1, further comprising, while the mobile node is operating on the cellular signal, if (455) the $RSSw$ value is not substantially maintained or gradually decreasing:
selecting (460) the Wi-Fi signal if (465) the received signal strength $RSS_W$ of the received Wi-Fi signals is greater than the $TH_W^I$ value and if the $RSS_C$ value is greater than the $TH_C^I$ value.

4. The method of claim 1, further comprising, while the mobile node is operating on the Wi-Fi signal, if (405) the $RSSw$ value is not gradually decreasing:
selecting (410) the cellular signal if (415) the $RSS_C$ value is less than the $TH_C^O$ value, and $RSS_W$ value is less than the $TH_W^O$ value.

5. The method of claim 1, wherein at least one of the Wi-Fi signal or the cellular signal defines a beacon signal.

6. An apparatus (500) to select one of a Wi-Fi signal or a cellular signal during an ongoing connection for handover, comprising:

a first module (510) configured to measure a signal strength indicator $RSS_W$ value for one or more received Wi-Fi signals and a signal strength indicator $RSSc$ value for one or more received cellular signals;
a memory module (515) configured to store signal strength threshold values for entering $TH_W^I$ and exiting $TH_W^O$ a Wi-Fi signal domain and for entering $TH_C^I$ and exiting $TH_C^O$ a cellular signal domain; and
a second module (520) in communication with the first module and the memory module, the second module configured to select (460) the Wi-Fi signal if (455) the $RSSw$ value is substantially maintained or gradually decreases and if the $RSS_W$ value is greater than the $TH_W^I$ value;
wherein the $RSSw$ value is determined to be substantially maintained or gradually decreasing if the $RSSw$ value is within a bounded range of values, the bounded range of values defined by a first previous signal strength indicator $RSS_W^{N-1}$, a second previous signal strength indicator $RSS_W^{N-2}$, and a configurable value $\sigma$, wherein $N$ is an $N^{th}$ received beacon signal, and wherein $RSS_W^{N-1}$ and $RSS_W^{N-2}$ correspond to the $(N - 1)^{th}$ and $(N - 2)^{th}$ beacons respectively, and wherein the bounded range of values is given by

$$[2 * RSS_W^{N-1} - RSS_W^{N-2} - \sigma, 2 * RSS_W^{N-1} - RSS_W^{N-2} + \sigma];$$

wherein $TH_W^O$ and $TH_C^O$ are respectively the Wi-Fi and cellular RSS values at a first switching point (320) corresponding to a location at which the RSS value of the cellular signal is stronger than the RSS value of the Wi-Fi signal when the mobile node is moving away from the ISW; and

wherein $TH_W^I$ and $TH_C^O$ are respectively the Wi-Fi and cellular RSS values at a second switching point (330) corresponding to a location at which the RSS value of the Wi-Fi signal is stronger than the RSS value of the cellular signal when the mobile node is moving towards the ISW.

7. The apparatus of claim 6, wherein the second module is further configured to, while the apparatus is operating on the Wi-Fi signal, select (410) the cellular signal if (405) the *RSSw* value is decreasing among the one or more received Wi-Fi signals and if the *RSSw* value for at least one of the received signals is less than the $TH_W^O$ value.

8. The apparatus of claim 6, wherein the second module is further configured to:
   if (455) the *RSSw* value is not substantially maintained or gradually decreasing, while the apparatus is operating on the cellular signal, select (460) the Wi-Fi signal if (465) the received signal strength $RSS_W$ for at least one of the received Wi-Fi signals is greater than the $TH_W^I$ value or if the $RSS_C$ value is greater than the $TH_C^I$ value.

9. A computer-readable storage device containing a set of instructions which, when read by a processor of a mobile node, cause the mobile node to perform a process as set forth in any of claims 1-5.

**Patentansprüche**

1. Verfahren zum Auswählen zwischen einem durch einen Wi-Fi-Signal-Anbieter, ISW, (305) bereitgestellten Wi-Fi-Signal und einem Zellularsignal während einer fortdauernden Verbindung für ein Handover, wobei das Verfahren in einem Mobilknoten ausgeführt wird, wobei das Verfahren Folgendes umfasst:

   während der Mobilknoten auf einem Zellularsignal arbeitet, Empfangen (450) eines oder mehrerer Wi-Fi-Signale und Messen eines Signalstärkeindikator- bzw. $RSS_W$-*Werts* für jedes der empfangenen Wi-Fi-Signale;
   während der Mobilknoten auf dem Zellularsignal arbeitet, Empfangen (450) eines oder mehrerer Zellularsignale und Messen eines Signalstärkeindikator- bzw. $RSS_C$-Werts für jedes der empfangenen Zellularsignale;

   Identifizieren von Signalstärkewertschwellen zum Eintreten $TH_W^I$ in eine und Verlassen $TH_W^O$ einer Wi-Fi-Signaldomäne;

   Identifizieren von Signalstärkeschwellenwerten zum Eintreten $TH_C^I$ in eine und Verlassen $TH_C^O$ einer Zellularsignaldomäne; und
   Auswählen (460) des Wi-Fi-Signals, falls (455) der $RSS_W$-*Wert* im Wesentlichen beibehalten wird oder allmählich abnimmt und falls der $RSS_W$-*Wert* größer als der $TH_W^I$-Wert ist,

   wobei der $RSS_W$-*Wert* als im Wesentlichen beibehalten oder allmählich abnehmend bestimmt wird, falls sich der $RSS_W$-*Wert* innerhalb eines beschränkten Wertebereichs befindet, wobei der beschränkte Wertebereich definiert ist durch einen ersten vorherigen Signalstärkeindikator $RSS_W^{N-1}$, einen zweiten vorherigen Signalstärkeindikator $RSS_W^{N-2}$ und einen konfigurierbaren Wert $\sigma$, wobei *N* ein *N-tes* empfangenes Beacon-Signal ist und wobei $RSS_W^{N-1}$ und $RSS_W^{N-2}$ dem (*N*-1)-*ten* bzw. (*N-2*)-*ten* Beacon entsprechen und wobei der beschränkte Wertebereich gegeben ist durch

$$[2 * RSS_W^{N-1} - RSS_W^{N-2} - \sigma, 2 * RSS_W^{N-1} - RSS_W^{N-2} + \sigma];$$

wobei $TH_W^O$ und $TH_C^O$ der Wi-Fi- bzw. der Zellular-RSS-Wert bei einem ersten Umschaltpunkt (320) sind, der einem Standort entspricht, an dem der RSS-Wert des Zellularsignals stärker als der RSS-Wert des Wi-Fi-Signals ist, wenn sich der Mobilknoten von dem ISW weg bewegt; und

wobei $TH_W^I$ und $TH_C^I$ der Wi-Fi- bzw. der Zellular-RSS-Wert bei einem zweiten Umschaltpunkt (330) sind, der einem Standort entspricht, an dem der RSS-Wert des Wi-Fi-Signals stärker als der RSS-Wert des Zellularsignals ist, wenn sich der Mobilknoten zu dem ISW hin bewegt.

2. Verfahren nach Anspruch 1, ferner umfassend, während der Mobilknoten auf einem Wi-Fi-Signal arbeitet, Auswählen (410) des Zellularsignals, falls (405) der $RSS_W$-Wert allmählich abnimmt und falls der $RSS_W$-Wert des empfangenen Signals geringer als der $TH_W^O\mathtt{-Wert}$ ist.

3. Verfahren nach Anspruch 1, ferner umfassend, während der Mobilknoten auf dem Zellularsignal arbeitet, falls (455) der $RSS_W$-Wert nicht im Wesentlichen beibehalten wird oder allmählich abnimmt:
Auswählen (460) des Wi-Fi-Signals, falls (465) die Empfangssignalstärke $RSS_W$ des empfangenen Wi-Fi-Signals größer als der $TH_W^I\mathtt{-Wert}$ ist und falls der $RSS_C$-Wert größer als der $TH_C^I\mathtt{-Wert}$ ist.

4. Verfahren nach Anspruch 1, ferner umfassend, während der Mobilknoten auf dem Wi-Fi-Signal arbeitet, falls (405) der $RSS_W$-Wert nicht allmählich abnimmt:
Auswählen (410) des Zellularsignals, falls (415) der $RSS_C$-Wert geringer als der $TH_C^O\mathtt{-Wert}$ ist und der $RSS_W$-Wert geringer als der $TH_W^O\mathtt{-Wert}$ ist.

5. Verfahren nach Anspruch 1, wobei das Wi-Fi-Signal und/oder das Zellularsignal ein Beacon-Signal definiert/definieren.

6. Einrichtung (500) zum Auswählen entweder eines Wi-Fi-Signals oder eines Zellularsignals währen einer fortdauernden Verbindung für ein Handover, die Folgendes umfasst:

ein erstes Modul (510), ausgelegt zum Messen eines Signalstärkeindikator- bzw. $RSS_W$-Werts für ein oder mehrere empfangene Wi-Fi-Signale und eines Signalstärkeindikator- bzw. $RSS_C$-Werts für ein oder mehrere empfangene Zellularsignale;

ein Speichermodul (515), ausgelegt zum Speichern von Signalstärkeschwellenwerten zum Eintreten $TH_W^I$ in eine und Verlassen $TH_W^O$ einer Wi-Fi-Signaldomäne und zum Eintreten $TH_C^I$ in eine und Verlassen $TH_C^O$ einer Zellularsignaldomäne; und

ein zweites Modul (520), das mit dem ersten Modul und dem Speichermodul in Kommunikation steht, wobei das zweite Modul ausgelegt ist zum Auswählen (460) des Wi-Fi-Signals, falls (455) der $RSS_W$-Wert im Wesentlichen beibehalten wird oder allmählich abnimmt und falls der $RSS_W$-Wert größer als der $TH_W^I-$ Wert ist;

wobei der $RSS_W$-Wert als im Wesentlichen beibehalten oder allmählich abnehmend bestimmt wird, falls sich der $RSS_W$-Wert innerhalb eines beschränkten Wertebereichs befindet, wobei der beschränkte Wertebereich definiert ist durch einen ersten vorherigen Signalstärkeindikator $RSS_W^{N-1}$, einen zweiten vorherigen Signalstärkeindikator $RSS_W^{N-2}$ und einen konfigurierbaren Wert $\sigma$, wobei $N$ ein $N$-tes empfangenes Beacon-Signal ist und wobei $RSS_W^{N-1}$ und $RSS_W^{N-2}$ dem ($N$-1)-ten bzw. ($N$-2)-ten Beacon entsprechen und wobei der beschränkte Wertebereich gegeben ist durch

$$[2 * RSS_W^{N-1} - RSS_W^{N-2} - \sigma, 2 * RSS_W^{N-1} - RSS_W^{N-2} + \sigma];$$

wobei $TH_W^O$ und $TH_C^O$ der Wi-Fi- bzw. der Zellular-RSS-Wert bei einem ersten Umschaltpunkt (320) sind, der einem Standort entspricht, an dem der RSS-Wert des Zellularsignals stärker als der RSS-Wert des Wi-Fi-Signals ist, wenn sich der Mobilknoten von dem ISW weg bewegt; und

wobei $TH_W^I$ und $TH_C^I$ der Wi-Fi- bzw. der Zellular-RSS-Wert bei einem zweiten Umschaltpunkt (330) sind, der einem Standort entspricht, an dem der RSS-Wert des Wi-Fi-Signals stärker als der RSS-Wert des Zellularsignals ist, wenn sich der Mobilknoten zu dem ISW hin bewegt.

7. Einrichtung nach Anspruch 6, wobei das zweite Modul ferner ausgelegt ist zum Auswählen (410), während die Einrichtung auf dem Wi-Fi-Signal arbeitet, des Zellularsignals, falls (405) der $RSS_W$-Wert unter dem einen oder den mehreren empfangenen Wi-Fi-Signalen abnimmt und falls der $RSS_W$-Wert für mindestens eines der empfangenen Signale geringer als der $TH_W^O-\mathrm{Wert}$ ist.

8. Einrichtung nach Anspruch 6, wobei das zweite Modul ferner zu Folgendem ausgelegt ist:
falls (455) der $RSS_W$-Wert nicht im Wesentlichen beibehalten wird oder allmählich abnimmt, während die Einrichtung auf dem Zellularsignal arbeitet, Auswählen (460) des Wi-Fi-Signals, falls (465) die Empfangssignalstärke $RSS_W$ für mindestens eines der empfangenen Wi-Fi-Signale größer als der $TH_W^I-\mathrm{Wert}$ ist oder falls der $RSS_C$-Wert größer als der $TH_C^I-\mathrm{Wert}$ ist.

9. Computerlesbare Speicherungsvorrichtung, die einen Satz Anweisungen enthält, die, wenn sie durch einen Prozessor eines Mobilknotens gelesen werden, veranlassen, dass der Mobilknoten einen Prozess nach einem der Ansprüche 1-5 durchführt.

**Revendications**

1. Procédé de sélection entre un signal Wi-Fi fourni par un fournisseur de signal Wi-Fi, ISW, (305) et un signal cellulaire lors d'une connexion en cours pour un transfert intercellulaire, le procédé étant exécuté au niveau d'un nœud mobile, le procédé comprenant :

tandis que le nœud mobile fonctionne sur un signal cellulaire, la réception (450) d'un ou plusieurs signaux Wi-Fi et la mesure d'une valeur d'indicateur d'intensité de signal $RSS_W$ pour chacun des signaux Wi-Fi reçus ;
tandis que le nœud mobile fonctionne sur le signal cellulaire, la réception (450) d'un ou plusieurs signaux cellulaires et la mesure d'une valeur d'indicateur d'intensité de signal $RSS_C$ pour chacun des signaux cellulaires reçus ;

l'identification de seuils de valeur d'intensité de signal pour l'entrée $TH_W^1$ et la sortie $TH_W^0$ dans et hors d'un domaine de signal Wi-Fi ;

l'identification de valeurs seuils d'intensité de signal pour l'entrée $TH_C^1$ et la sortie $TH_C^0$ dans et hors d'un domaine de signal cellulaire ; et
la sélection (460) du signal Wi-Fi si (455) la valeur $RSS_W$ est essentiellement maintenue ou si elle diminue progressivement et si la valeur $RSS_W$ est supérieure à la valeur de $TH_W^1$,
la valeur $RSS_W$ étant déterminée comme étant essentiellement maintenue ou comme diminuant progressivement si la valeur $RSS_W$ est comprise dans une plage de valeurs délimitée, la plage de valeurs délimitée étant définie par un premier indicateur d'intensité de signal précédent $RSS_W^{N-1}$, un deuxième indicateur d'intensité de signal précédent $RSS_W^{N-2}$, et une valeur configurable $\sigma$, où $N$ est un $N^{ième}$ signal balise reçu et $RSS_W^{N-1}$ et $RSS_W^{N-2}$ correspondent respectivement aux $(N-1)^{ième}$ et $(N-2)^{ième}$ balises, et la plage de valeurs délimitée étant donnée par :

$$[2*RSS_W^{N-1} - RSS_W^{N-2} - \sigma, 2*RSS_W^{N-1} - RSS_W^{N-2} + \sigma] \ ;$$

où $TH_W^0$ et $TH_C^0$ sont respectivement les valeurs RSS Wi-Fi et cellulaire à un premier point de commutation (320) correspondant à un emplacement auquel la valeur RSS du signal cellulaire est plus forte que la valeur RSS du signal Wi-Fi lorsque le nœud mobile s'éloigne de l'ISW ; et

où $TH_W^1$ et $TH_C^1$ sont respectivement les valeurs RSS Wi-Fi et cellulaire à un deuxième point de commutation (330) correspondant à un emplacement auquel la valeur RSS du signal Wi-Fi est plus forte que la valeur RSS du signal cellulaire lorsque le nœud mobile se rapproche de l'ISW.

2. Procédé selon la revendication 1, comprenant en outre, tandis que le nœud mobile fonctionne sur un signal Wi-Fi, la sélection (410) du signal cellulaire si (405) la valeur $RSS_W$ diminue progressivement et si la valeur $RSS_W$ du signal reçu est inférieure à la valeur $TH_W^0$.

3. Procédé selon la revendication 1, comprenant en outre, tandis que le nœud mobile fonctionne sur le signal cellulaire, si (455) la valeur $RSS_W$ n'est pas essentiellement maintenue ou si elle diminue progressivement :
la sélection (460) du signal Wi-Fi si (465) l'intensité de signal reçue $RSS_W$ des signaux Wi-Fi reçus est supérieure à la valeur $TH_W^1$ et si la valeur $RSS_C$ est supérieure à la valeur $TH_C^1$.

4. Procédé selon la revendication 1, comprenant en outre, tandis que le nœud mobile fonctionne sur le signal Wi-Fi, si (405) la valeur $RSS_W$ ne diminue pas progressivement :
la sélection (410) du signal cellulaire si (415) si la valeur $RSS_C$ est inférieure à la valeur $TH_C^0$, et la valeur $RSS_W$ est inférieure à la valeur $TH_W^0$.

5. Procédé selon la revendication 1, dans lequel au moins l'un du signal Wi-Fi ou du signal cellulaire définit un signal balise.

6. Appareil (500) pour sélectionner l'un d'un signal Wi-Fi ou d'un signal cellulaire lors d'une connexion en cours pour un transfert intercellulaire, comprenant :

un premier module (510) configuré pour mesurer une valeur d'indicateur d'intensité de signal $RSS_W$ pour un ou plusieurs signaux Wi-Fi reçus et une valeur d'indicateur d'intensité de signal $RSS_C$ pour un ou plusieurs signaux cellulaires reçus ;

un module de mémoire (515) configuré pour stocker des valeurs seuils d'intensité de signal pour l'entrée $TH_W^1$ et la sortie $TH_W^0$ dans et hors d'un domaine de signal Wi-Fi et pour l'entrée $TH_C^1$ et la sortie $TH_C^0$ dans et hors d'un domaine de signal cellulaire ; et

un second module (520) en communication avec le premier module et le module de mémoire, le second module étant configuré pour sélectionner (460) le signal Wi-Fi si (455) la valeur $RSS_W$ est essentiellement maintenue ou si elle diminue progressivement et si la valeur $RSS_W$ est supérieure à la valeur de $TH_W^1$ ;

la valeur $RSS_W$ étant déterminée comme étant essentiellement maintenue ou comme diminuant progressivement si la valeur $RSS_W$ est comprise dans une plage de valeurs délimitée, la plage de valeurs délimitée étant définie par un premier indicateur d'intensité de signal précédent $RSS_W^{N-1}$, un deuxième indicateur d'intensité de signal précédent $RSS_W^{N-2}$, et une valeur configurable $\sigma$, où $N$ est un $N^{\text{ième}}$ signal balise reçu et $RSS_W^{N-1}$ et $RSS_W^{N-2}$ correspondent respectivement aux $(N-1)^{\text{ième}}$ et $(N-2)^{\text{ième}}$ balises, et la plage de valeurs délimitée étant donnée par :

$$[2 * RSS_W^{N-1} - RSS_W^{N-2} - \sigma, 2 * RSS_W^{N-1} - RSS_W^{N-2} + \sigma] \; ;$$

où $TH_W^0$ et $TH_C^0$ sont respectivement les valeurs RSS Wi-Fi et cellulaire à un premier point de commutation (320) correspondant à un emplacement auquel la valeur RSS du signal cellulaire est plus forte que la valeur RSS du signal Wi-Fi lorsque le nœud mobile s'éloigne de l'ISW ; et

où $TH_W^1$ et $TH_C^0$ sont respectivement les valeurs RSS Wi-Fi et cellulaire à un deuxième point de commutation (330) correspondant à un emplacement auquel la valeur RSS du signal Wi-Fi est plus forte que la valeur RSS du signal cellulaire lorsque le nœud mobile se rapproche de l'ISW.

**7.** Appareil selon la revendication 6, dans lequel le second module est en outre configuré pour, tandis que l'appareil fonctionne sur le signal Wi-Fi, sélectionner (410) le signal cellulaire si (405) la valeur $RSS_W$ diminue parmi le ou les signaux Wi-Fi reçus et si la valeur $RSS_W$ pour au moins l'un des signaux reçus est inférieure à la valeur $TH_W^0$.

**8.** Appareil selon la revendication 6, dans lequel le second module est en outre configuré pour :
si (455) la valeur $RSS_W$ n'est pas essentiellement maintenue ou si elle ne diminue pas progressivement, tandis que l'appareil fonctionne sur le signal cellulaire, sélectionner (460) le signal Wi-Fi si (465) l'intensité de signal reçue $RSS_W$ pour au moins l'un des signaux Wi-Fi reçus est supérieure à la valeur $TH_W^1$ ou si la valeur $RSS_C$ est supérieure à la valeur $TH_C^1$.

**9.** Dispositif de stockage lisible par ordinateur contenant un ensemble d'instructions qui, lorsqu'il est lu par un processeur d'un nœud mobile, amène le nœud mobile à exécuter un procédé tel qu'exposé dans l'une quelconque des revendications 1 à 5.

*Fig. 1 (Prior Art)*

*Fig. 2*

EP 3 127 370 B1

_Fig. 3_

400 — Measure Wi-Fi and Cellular RSS

405 — Normal($RSS_W$) && $RSS_W < TH_W^O$ — Yes → Handoff to Cellular (410)

No ↓

415 — $RSS_W < TH_W^O$ && $RSS_C < TH_C^O$ — Yes →

No ↓

420 — $RSS_W < TH_W^O$ — No → $N_{RSS} = 0$ (425); Yes → $N_{RSS} = N_{RSS} + 1$ (430)

435 — $N_{RSS} > N_{RSS}^{TH}$ — No / Yes → Handoff to Cellular (410)

450 — Measure Wi-Fi and Cellular RSS

455 — Normal($RSS_W$) && $RSS_W > TH_W^I$ — Yes → Handoff to Wi-Fi (460)

No ↓

465 — $RSS_W > TH_W^I$ && $RSS_C > TH_C^I$ — Yes →

No ↓

470 — $RSS_W > TH_W^I$ — No → $N_{RSS} = 0$ (475); Yes → $N_{RSS} = N_{RSS} + 1$ (480)

485 — $N_{RSS} > N_{RSS}^{TH}$ — Yes → Handoff to Wi-Fi (460); No

_Fig. 4_

*Fig. 5*

_Fig. 6_

## REFERENCES CITED IN THE DESCRIPTION

**Patent documents cited in the description**

- US 20050059400 A1

- US 20070133472 A1

**Non-patent literature cited in the description**

- Wireless LAN Medium Access Control (MAC) and Physical Layer (PHY) Specifications. *IEEE 802.11-2012, IEEE Standard for Information technology-Telecommunications and information exchange between systems Local and metropolitan area networks - Specific requirements,* 29 March 2012
- *IEEE 802.11-09/0308r12 - TGac Channel Model Addendum Document*

- Wireless LAN Medium Access Control (MAC) and Physical Layer (PHY) Specifications - Amendment 3: Enhancements for Very High Throughput in the 60GHz. *IEEE P802.11ad-2012, IEEE Standard for Information Technology - Telecommunications and Information Exchange Between Systems - Local and Metropolitan Area Networks - Specific Requirements,* 28 December 2012
- 3GPP Long Term Evolution (LTE). 3rd Generation Partnership Project (3GPP)